# EUROPEAN PATENT APPLICATION

(11) **EP 0 829 715 A2**
(43) Date of publication of application: **18.03.1998**
(21) Application number: 97306115.3
(22) Date of filing: 12.08.1997
(51) Int. Cl.: G01N 30/16, G01N 30/24

(54) **Method and apparatus for performing liquid chromatography**

(30) Priority: 15.08.1996 JP 250805/96
(71) Applicant: KYOTO DAIICHI KAGAKU CO., LTD., Kyoto-shi Kyoto-fu (JP)
(72) Inventor: Kinose, Tamotsu, Higashikujo, Minami-ku, Kyoto-shi Kyoto (JP); Minato, Hiroyuki, Higashikujo, Minami-ku, Kyoto-shi Kyoto (JP)
(74) Representative: Cross, Rupert Edward Blount

(57) **Abstract**

Liquid chromatography is preformed by using an apparatus which includes a sample pretreatment unit (1) having a sample preparation section (11), an analysis unit (2) having a sample separation column (23) and a solvent preparation section (21), an injection valve (3) provided with an injection loop (31), and a controller (4) for controlling the apparatus. The controller (4) causes the injection valve (3) to normally connect the injection loop (31) to the solvent preparation section (21) and the column (23), but connect the injection loop (31) to the sample preparation section (11) only when the injection loop (31) is loaded with the sample.

## Description

### BACKGROUND OF THE INVENTION

### 1. Field of the Invention:

The present invention relates to a method and apparatus for performing liquid chromatography, particularly high-speed liquid chromatography. The present invention also relates to an information storing medium which stores a control program for controlling liquid chromatography.

### 2. Description of the Related Art:

A liquid chromatography apparatus is known which comprises a sample pretreatment unit including a sample preparation section, an analysis unit including a sample separation column and a solvent preparation section, an injection valve provided with an injection loop, and a controller for causing the injection valve to selectively connect the injection loop to the sample preparation section and the solvent preparation section. When the injection loop is connected to the sample preparation section, a predetermined amount of sample is loaded in the injection loop. Further, when the injection loop is subsequently connected to the solvent preparation section, a solvent from the solvent preparation section passes through the injection loop to inject the previously loaded sample into the column for separation and analysis.

With the known chromatography apparatus, the injection valve is controlled by the controller so that the injection loop is normally connected to the sample preparation section, but connected to the solvent preparation section and the column only at the time of injecting the sample into the column. After the injection of the sample, a washing liquid is supplied from the sample preparation chamber to the injection loop and other flow paths of the sample pretreatment unit for cleaning purposes.

However, the above-described manner of controlling the injection valve is disadvantageous if a change of samples is performed at a high speed; i.e., if the liquid chromatography apparatus is of the high-speed type. More specifically, with the high-speed liquid chromatography apparatus, the time assigned for separation of each sample at the column is very short, and the cleaning of the injection loop and the other flow paths of the sample pretreatment unit need be done in this short time. Thus, the cleaning of the injection loop is likely to be insufficient, which may allow a portion of the sample to remain in the injection loop. As a result, the injection loop need be replaced frequently due to sample accumulation, which makes the operation of the liquid chromatography apparatus uneconomical and inefficient.

### SUMMARY OF THE INVENTION

It is, therefore, an object of the present invention to provide a method of performing liquid chromatography wherein an injection loop can be sufficiently cleaned for removal of a previous sample and for introduction of a new sample even if the liquid chromatography is performed at a high speed.

Another object of the present invention is to provide a liquid chromatography apparatus which can be used for performing such a method.

A further object of the present invention is to provide an information storing medium carrying a control program for used in liquid chromatography.

According to one aspect of the present invention, there is provided a method for performing liquid chromatography comprising: loading an injection loop with a sample from a sample preparation section; and feeding the sample to a sample separation column for separation and analysis by causing a solvent from a solvent preparation section to flow through the injection loop; characterised in that the injection loop is normally connected to the solvent preparation section and the column, but connected to the sample preparation section only when the injection loop is loaded with the sample.

The advantageous effects obtainable by the above-described method will be described hereinafter with reference to the accompanying drawings.

Examples of the sample include blood and urine which are diluted suitably for analysis. However, these examples are not limitative, and the present invention may be applied to other analytes.

In a preferred embodiment, use is made of an injection valve for selectively connecting the injection loop to the sample preparation section and the solvent preparation section. Further, the injection valve may be controlled by a controller.

Advantageously, the sample preparation section may be cleaned with a washing liquid while the injection loop is connected to the solvent preparation section and the column. Further, a sample flow path extending from the sample preparation section to the injection valve may also be cleaned with a washing liquid while the injection loop is connected to the solvent preparation section and the column.

According to another aspect of the present invention, there is provided a liquid chromatography apparatus comprising: a sample pretreatment unit including a sample preparation section; an analysis unit including a sample separation column and a solvent preparation section; a switching device provided with an injection loop; and a controller for causing the switching device to selectively connect the injection loop to the sample preparation section and the solvent preparation section; characterised in that the controller causes the switching device to normally connect the injection loop to the solvent preparation section and the column, but connect the injection loop to the sample preparation section only when the injection loop is loaded with the sample.

The controller may be a CPU (central processing unit) which operates on a control program stored in a ROM (read-only memory). Alternatively, the controller may comprise a combination of various gate circuits for performing the intended switching of the switching device.

Typically, the switching device may comprise an injection valve which has six ports. A first one of the ports may be connected to the column for example. A second one of the ports may be connected to the solvent preparation section for example. A third one of the ports may be connected to one end of the injection loop for example. A fourth one of the ports may be connected to a drain tank for example. A fifth one of the ports may be connected to the sample preparation section for example. Finally, a sixth one of the ports may be connected to the other end of the injection loop for example.

Preferably, the liquid chromatography apparatus may further comprise a data output means actuated by the controller for output of analysis results. Specifically, the data output means may comprise a recording unit for printing out the analysis results on a recording paper.

According to a further aspect of the present invention, there is provided an information storing medium carrying a control program for controlling a liquid chromatography apparatus which comprises: a sample pretreatment unit including a sample preparation section; an analysis unit including a sample separation column and a solvent preparation section; and a switching device provided with an injection loop; the control program causing the switching device to selectively connect the injection loop to the sample preparation section and the solvent preparation section; characterised in that the control program causes the switching device to normally connect the injection loop to the solvent preparation section and the column, but connect the injection loop to the sample preparation section only when the injection loop is loaded with the sample.

Typically, the information storing medium may be a ROM (read-only memory) from which the stored control program is read out by a CPU (central processing unit) for controlling the overall operation of the liquid chromatography apparatus.

Other objects, features and advantages of the present invention will become apparent from the following description of the preferred embodiments given with reference to the accompanying drawings.

### BRIEF DESCRIPTION OF THE DRAWINGS

In the accompanying drawings:
Fig. 1 is a schematic view showing a high-speed liquid chromatography apparatus which incorporates a control apparatus embodying the present invention;
Fig. 2 is a schematic view illustrating one state of an injection valve incorporated in the same chromatography apparatus;
Fig. 3 is a schematic view illustrating another state of the same injection valve; and
Fig. 4 is a timing chart illustrating the operational states of the injection valve together with the supply states of a moving phase and a sample in a single operation cycle of the same chromatography apparatus.

### DETAILED DESCRIPTION OF THE PREFERRED EMBODIMENTS

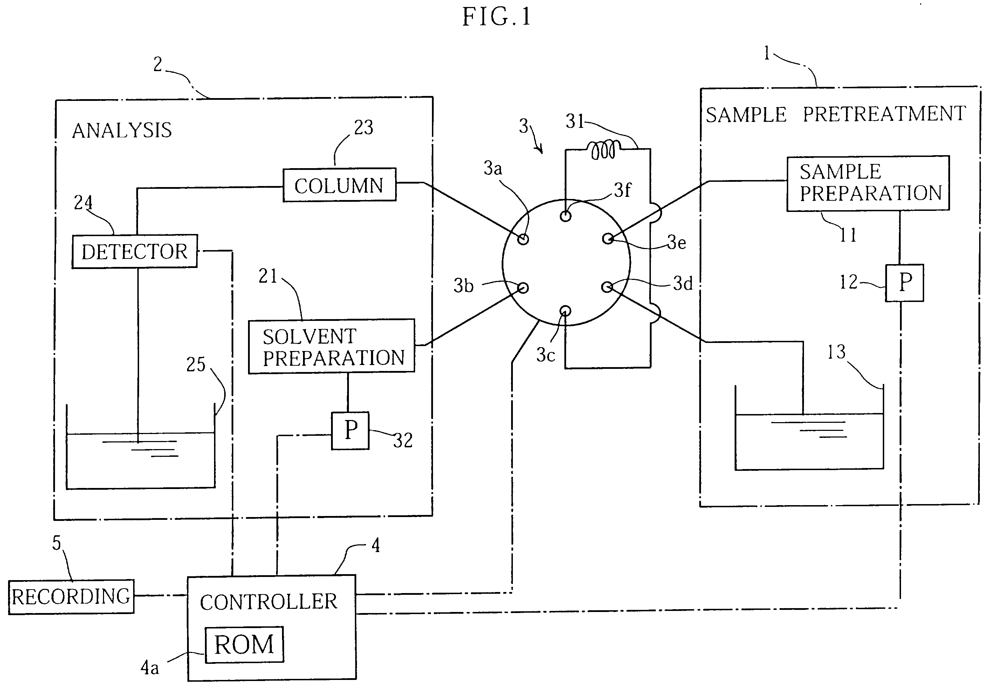

Referring first to Fig. 1 of the accompanying drawings, there is illustrated a liquid chromatography apparatus embodying the present invention. The chromatography apparatus includes a sample pretreating unit 1, an analysis unit 2, an injection valve 3, a controller 4, and a recording unit 5.

The sample pretreatment unit 1 prepares a sample for feeding to the injection valve 3. The sample pretreating unit 1 includes a sample preparation section 11, a liquid feed pump 12, and a drain tank 13. The sample preparation section 11 prepares a sample by sucking a predetermined amount of analyte such as blood or urine and subsequently diluting it. The liquid feed pump 12 feeds the thus prepared sample into the injection valve 3. The drain tank 13 stores an overflowing portion of the sample from the injection valve 3, as more specifically described hereinafter.

The analysis unit 2 separates the different components of the sample injected from the injection valve 3 for analysis. The analysis unit 3 includes a solvent preparation section 21, a liquid feed pump 22, a column 23, a detector 24, and a drain tank 25. The solvent preparation section 21 prepares a solvent as a moving phase. The liquid feed pump 22 injects the thus prepared solvent into the column 23 through the injection valve 3. The column 23 separates the different components of the sample injected together with the solvent. The detector 24 measures the thus separated components. The drain tank 25 stores the sample and the solvent after analysis.

The sample pretreatment unit 1 and the analysis unit 2 per se are well known. Thus, more details of these units are not described herein.

The injection valve 3 includes an injection loop 31 and a set of six ports 3a-3f in the illustrated embodiment. The port 3a is connected to the column 23. The port 3b is connected to the solvent preparation section 21. The port 3c is connected to one end of the injection loop 31. The port 3d is connected to the drain tank 13. The port 3e is connected to the sample preparation section 12. The port 3f is connected to the other end of the injection loop 31.

The injection valve 3 switches between two different states which include a first state wherein the injection loop 31 is connected to the sample preparation section 11 of the sample pretreatment unit 1, and a second state wherein the injection loop 31 is connected to the column 23 of the analysis unit 2. The injection loop 31 serves to retain a predetermined amount of the sample for analysis.

The controller 4 comprises a microprocessor for example and incorporates a ROM (read-only memory) 4a for storing a control program used to control the operation of the pumps 12, 22 and the injection valve 3. The controller 4 also receives detection signals from the detector 24 for output of the results of analysis to the recording unit 5.

The recording unit 5 may be a thermal printer for example for printing out the results of analysis onto a recording paper (thermosensitive paper for example) under the control of the controller 4.

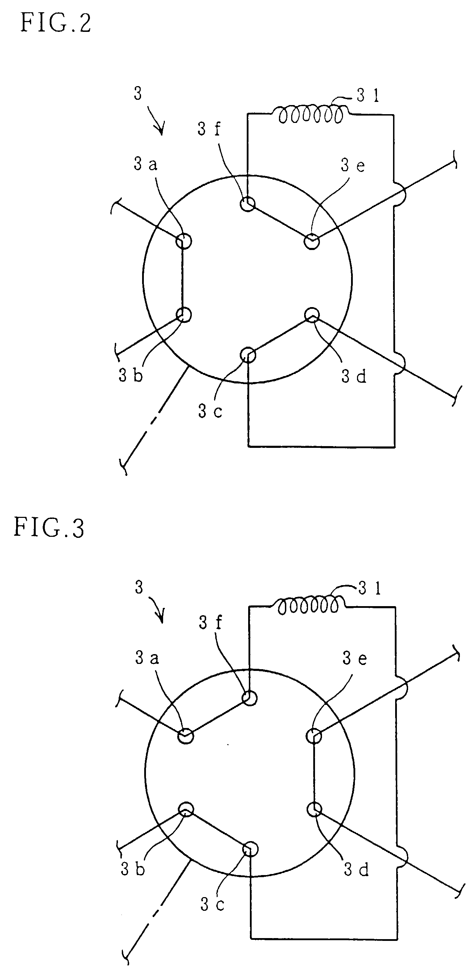

Figs. 2 and 3 illustrates the two different states of the injection valve 3 selected under the control of the controller 4. Specifically, Fig. 2 shows the first state of the injection valve 3, whereas Fig. 3 shows the second state of the same.

In the first state shown in Fig. 2, the port 3a communicates with the port 3b, the port 3c is connected to the port 3d, and the port 3e is connected to the port 3f. In this state, the sample prepared at the sample preparation section 11 flows into the injection valve 3 through the port 3e, exits out from the port 3f for passing through the injection loop 31, reenters the injection valve 3 through the port 3c, and finally discharges through the port 3d into the drain tank 13. Further, the solvent prepared at the solvent preparation section 21 flows into the injection valve 3 through the port 3b, and exits out from the port 3a for passing through the column 23 and the detector 24 before discharging into the drain tank 25. Thus, in the first state, a predetermined amount of the sample is introduced into the injection loop 31 for temporary retention therein, whereas the solvent from the solvent preparation section 21 is allowed to pass through the column 23 without passing through the injection loop 31.

In the second state shown in Fig. 3, the port 3a communicates with the port 3f, the port 3b is connected to the port 3c, and the port 3d is connected to the port 3e. In this state, the sample from the sample preparation section 11 flows into the injection valve 3 through the port 3e, and exits out from the port 3d for discharging into the drain tank 13. Further, the solvent from the solvent preparation section 21 flows into the injection valve 3 through the port 3b, exits out from the port 3c for passing through the injection loop 31, reenters the injection valve 3 through the port 3f, and finally exits out from the port 3a for passing through the column 23 and the detector 24 before discharging into the drain tank 25. Thus, in the second state, the solvent from the solvent preparation section 21 passes through the injection loop 31 as a moving phase for injecting the predetermined amount of the sample (previously retained in the injection loop 31 in the first state shown in Fig. 2) into the column 23, whereas the sample from the sample preparation section 11 is allowed to bypass the injection loop 31 for direct discharge into the drain tank 13.

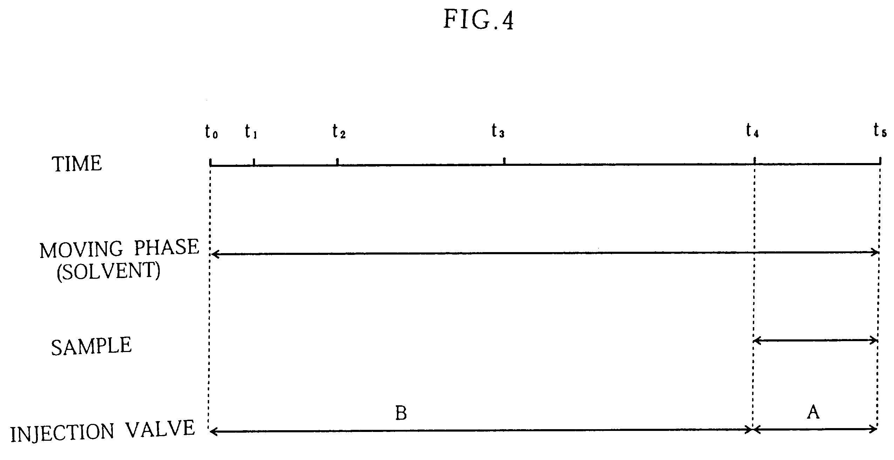

Next, reference is made to Fig. 4 for explaining the operation of the high-speed liquid chromatography apparatus described above. Fig. 4 illustrates a single complete operation cycle of the chromatography apparatus wherein supply of the solvent (moving phase) and the sample (analyte) is shown with lapse of time together with the switching state of the injection valve 3.

In a period from time t4 to time t5, the injection valve 3 assumes the first state A illustrated in Fig. 2, so that the sample from the sample preparation section 11 is allowed to flow into the injection loop 31 only in this period. In a period from time t0 to time t4, the injection valve 3 assumes the second state B, so that the solvent from the solvent preparation section 21 is fed by the liquid feed pump 22 to flow through the injection loop 31. Further, throughout the overall cycle period from time t0 to time t5, the solvent from the solvent preparation section 21 enters the injection valve 3 through the port 3b and exits out through the port 3a.

The first period between time t0 and time t1 is a sample injection period wherein a predetermined amount of the sample previously retained or trapped in the injection loop 31 is forced out therefrom and injected into the column 23 by the solvent supplied from the solvent preparation section 21 to the injection valve 3 by the liquid feed pump 22. In this sample injection period t0-t1, no operation takes place within the sample pretreatment unit 1.

The second period between time t1 and time t2 is a first cleaning period wherein a sample flow path extending from the sample preparation section 11 to the drain tank 13 is cleaned by a washing liquid supplied by the liquid feed pump 12, so that the portion of the sample remaining in the sample flow path is removed by the washing liquid. In this cleaning period t1-t2, however, since the port 3e is connected to the port 3d, the washing liquid does not enter the injection loop 31.

The third period from time t2 to time t3 is a second cleaning period wherein the interior of the sample preparation section 11 itself is cleaned by the washing liquid supplied by the liquid feed pump 12 from a washing liquid source (not shown). For this purpose, a plurality of valves (not shown) provided for the sample preparation section 11 are successively switched under control of the controller 4 for removing a portion of the sample remaining within the sample preparation section 11.

The fourth period between time t3 and time t4 is a sample preparing period wherein a predetermined amount of new analyte such as blood or urine is sucked into the sample preparation section 11 from an analyte container (not shown) and diluted with a dilution liquid to a suitable concentration. Such preparation of the new sample is also performed under control of the controller 4.

The fifth period between time t4 and time t5 is a sample loading period wherein the new sample prepared at the sample preparation section 11 is loaded into the injection loop 31. For this purpose, the injection valve 3 is shifted from the second state B (Fig. 3) to the first state A (Fig. 2) for feeding, under the action of the liquid feed pump 12, the new sample to the port 3e. Since, in the first state A, the port 3e is connected to the port 3f, a predetermined amount of new sample is loaded into the injection loop 31. A portion of the new sample which overflows the injection loop 31 is discharged into the drain tank 13. Further, during the sample loading period t4-t5, the solvent from solvent preparation section 21 bypasses the injection loop 31 for flowing through the column 4.

With respect to the analysis unit 2, on the other hand, the period from time t1 to t5 is an analysis period. Specifically, during the analysis period t1-t5 for the analysis unit 2, the sample injected into the column 23 together with the solvent in the sample injection period t0-t1 is separated into different components which are detected by the detector 24 for measurement. The detection signals from the detector 24 is inputted to the controller 4 which causes the recording unit 5 to print out the analysis results onto a recording paper (not shown).

Further, the period from time t1 to time t4 is also a cleaning period for the analysis unit 2. More specifically, in this cleaning period t1-t4, the solvent from the solvent preparation section 21 continuously flows through the injection loop 31, so that a small amount of sample remaining in the injection loop 31 after the sample injection period t0-t1 is washed away into the drain tank 25 through the column 23 and the detector 24.

According to the illustrated embodiment, the solvent from the solvent preparation section 21 continues to flow through the injection loop 31 for a sufficiently long time (period t1-t4) even after injection of the sample in the sample injection period t0-t1. Thus, it is possible to prevent a fraction of the sample from remaining in the injection loop 31, thereby obviating the need for frequently replacing the injection loop 31 with a new one. As a result, the high-speed liquid chromatography can be performed economically without much loss of time for replacement.

Conventionally, by contrast, cleaning of the injection loop 31 is performed only in a short period t1-t2 with the use of a washing liquid from the sample preparation section 11, which results in accumulation of sample remainder within the injection loop and therefore leads to the need for frequent replacement of the injection loop.

In the illustrated embodiment, no operation is performed in the sample pretreatment unit 1 during the sample injection period t0-t1. However, this period may be utilized for cleaning the sample flow path.

Further, in the illustrated embodiment, the solvent from the solvent preparation section 21 is allowed to bypass the injection loop 31 for flowing through the column 23. However, the liquid feed pump 22 may be temporarily stopped in this period.

Moreover, in place of or in addition to printing out the results of analysis onto a recording paper, the analysis results may be displayed on a suitable display (not shown).

The present invention being thus described, it is obvious that the same may be varied in many other ways. For instance, the injection valve 3 may be replaced with any switching device which is provided with an injection loop and which is capable of selectively switching between a first state for connecting the injection loop to the sample preparation section 11 of the sample pretreatment unit 1, and a second state for connecting the injection loop to the column 23 of the analysis unit 2. Such variations are not to be regarded as a departure from the spirit and scope of the invention, and all such variations as would be obvious to those skilled in the art are intended to be included within the scope of the following claims.

## Claims

1. A method for performing liquid chromatography comprising:
loading an injection loop (31) with a sample from a sample preparation section (11); and
feeding the sample to a sample separation column (23) for separation and analysis by causing a solvent from a solvent preparation section (21) to flow through the injection loop (31);
characterised in that the injection loop (31) is normally connected to the solvent preparation section (21) and the column (23), but connected to the sample preparation section (11) only when the injection loop (31) is loaded with the sample.

2. The method according to claim 1, wherein the injection loop (31) is selectively connected to the sample preparation section (11) and the solvent preparation section (21) by switching an injection valve (3).

3. The method according to claim 2, wherein the injection valve (3) is controlled by a controller (4).

4. The method according to claim 1, wherein the sample preparation section (11) is cleaned with a washing liquid while the injection loop (31) is connected to the solvent preparation section (21) and the column (23).

5. The method according to claim 2 or 3, wherein a sample flow path extending from the sample preparation section (11) to the injection valve (3) is cleaned with a washing liquid while the injection loop (31) is connected to the solvent preparation section (21) and the column (23).

6. A liquid chromatography apparatus comprising:
a sample pretreatment unit (1) including a sample preparation section (11);
an analysis unit (2) including a sample separation column (23) and a solvent preparation section (21);
a switching device (3) provided with an injection loop (31); and
a controller (4) for causing the switching device (3) to selectively connect the injection loop (31) to the sample preparation section (11) and the solvent preparation section (21);
characterised in that the controller (4) causes the switching device (3) to normally connect the injection loop (31) to the solvent preparation section (21) and the column (23), but connect the injection loop (31) to the sample preparation section (11) only when the injection loop (31) is loaded with the sample.

7. The apparatus according to claim 6, wherein the switching device comprises an injection valve (3).

8. The apparatus according to claim 7, wherein the injection valve (3) has six ports (3a-3f), a first one (3a) of the ports being connected to the column (23), a second one (3b) of the ports being connected to the solvent preparation section (21), a third one (3c) of the ports being connected to one end of the injection loop (31), a fourth one (3d) of the ports being connected to a drain tank (13), a fifth one (3e) of the ports being connected to the sample preparation section (21), a sixth one (3f) of the ports being connected to the other end of the injection loop (31).

9. The apparatus according to any one of claims 6 to 8, further comprising a data output means (5) caused by the controller (4) for output of analysis results.

10. The apparatus according to claim 9, wherein the data output means comprises a recording unit (5) for printing out the analysis results on a recording paper.

11. An information storing medium carrying a control program for controlling a liquid chromatography apparatus which comprises: a sample pretreatment unit (1) including a sample preparation section (11); an analysis unit (2) including a sample separation column (23) and a solvent preparation section (21); and a switching device (3) provided with an injection loop (31); the control program causing the switching device (3) to selectively connect the injection loop (31) to the sample preparation section (11) and the solvent preparation section (21);
characterised in that the control program causes the switching device (3) to normally connect the injection loop (31) to the solvent preparation section (21) and the column (23), but connect the injection loop (31) to the sample preparation section (11) only when the injection loop (31) is loaded with the sample.
